# FASCICULE DE BREVET EUROPEEN

(11) **EP 3 982 737 B1**
(45) Date de publication et mention de la délivrance du brevet: **11.10.2023**
(21) Numéro de dépôt: 20742335.1
(22) Date de dépôt: 13.06.2020
(51) Int. Cl.: A21D 8/04, A23L 33/00, A23L 33/135, A21D 8/00

(54) **BLOC DE LEVAIN VIVANT DÉCOUPABLE**
SCHNEIDBARER LEBENDER TREIBMITTELBLOCK
CUTTABLE LIVE LEAVEN BLOCK

(30) Priorité: 13.06.2019 FR 1906343
(43) Date de publication de la demande: 20.04.2022
(73) Titulaire: Lesaffre et Compagnie, 75001 Paris (FR)
(72) Inventeur: BRYCKAERT, Emilie, 59118 WAMBRECHIES (FR); DELCHAMBRE, Florence, 59890 QUESNOY-SUR-DEULE (FR); SEMERIA, Pauline, 22400 Lamballe-Armor (FR)
(74) Mandataire: Plasseraud IP
(86) Numéro de dépôt international: PCT/FR2020/051017
(87) Numéro de publication internationale: WO 2020/249917

(56) Documents cités:
- WO-A1-2019/068700
- FR-A1- 2 701 356
- FR-A1- 3 037 773

## Description

La présente invention porte sur un levain vivant, facile à utiliser et à transporter et de longue conservation.

Historiquement, le levain a été le tout premier ferment de panification utilisé dans la fabrication du pain. Il est issu d'un mélange de farine et d'eau dans lequel s'exerce l'activité métabolique d'une population hétérogène de bactéries lactiques et de levures, soit par fermentation spontanée (levain dit « naturel »), soit par fermentation initiée par une culture starter, avec ou sans rafraîchi.

Les panifications sur levain génèrent les plus grandes richesses aromatiques grâce à la mise en oeuvre d'une flore complexe, associant intimement levures et bactéries.

Pour satisfaire les besoins du marché et simplifier le travail du boulanger, différents types de produits ont été proposés tels que des starters pour levain, des levains prêts à l'emploi, puis des levains dévitalisés.

Les starters de panification, qui se présentent généralement sous forme liquide, pâteuse, ou sous forme de poudre lyophilisée de microorganismes, permettent de réaliser un levain en au moins une étape et en au moins 16 heures. Pour préparer le levain tout point à partir d'un starter, il suffit de mettre le starter dans l'eau par exemple à température de 30/35°C et d'y ajouter la farine et éventuellement le sel. Une fois le mélange homogène, on laisse fermenter la pâte pendant au moins 16 h à des températures généralement comprises entre 20 et 35°C.

Le levain tout point obtenu en une seule étape est alors prêt à être incorporé à la recette de fabrication de la pâte boulangère, par exemple du pain ou de la brioche, dans les mêmes proportions qu'un levain spontané. Les professionnels de la panification s'affranchissent ainsi des phases délicates et risquées de démarrage et de l'entretien d'un levain spontané. Avec cette méthode, ils s'assurent une régularité des performances et la reproductibilité des résultats.

Le levain vivant actif prêt à l'emploi est un levain « tout point » obtenu par une fermentation naturelle de farines de céréales. Il se présente sous forme liquide et s'incorpore directement au pétrissage à hauteur de 5 à 20 % du poids total de farine. Il garantit aux boulangers un gain de productivité en évitant les contraintes des rafraîchis, mais aussi les dérives résultantes de contaminations extérieures par des microorganismes indésirables.

La demanderesse a également développé une gamme de levains dévitalisés, qui peuvent être incorporés au pétrin sans modifier la recette initiale. Ils confèrent aux produits de boulangerie dans lesquels ils sont mis en oeuvre une typicité aromatique spécifique des céréales fermentées.

Même si ces produits sont plus faciles d'utilisation que le levain classique, les boulangers ont besoin de produits permettant une très bonne reproductibilité au fur et à mesure des fournées et qui se conservent longtemps.

Une autre gamme de produits utiles en panification pour améliorer les qualités organoleptiques des produits de boulangerie sont les améliorants de panification à activité enzymatique, qui sont utilisés en plus de la levure ou du levain. La Société Demanderesse en a développé différents et notamment a décrit dans la demande de brevet WO2019/068700 un améliorant de panification composé d'un ingrédient usuel d'amélioration de la panification (notamment un mélange d'enzymes) et de 10⁷ CFU de microorganismes qui peuvent être apportés par un levain. Ce produit n'est pas utilisé comme du levain de panification prêt à l'emploi, à savoir comme un agent levant. Le levain, lorsqu'il est présent dans cet améliorant est un véhicule pour le mélange enzymatique. Le taux d'incorporation est trop faible pour faire lever la pâte à pain et de la levure boulangère est ajoutée afin de faire lever la pâte. FR 2 701 356 A1 divulgue une composition additive pour la fabrication du pain.

FR 3 037 773 A1 divulgue un améliorant et un procédé de panification pour pains précuits et conservés sans congélation.

Les présents inventeurs ont trouvé qu'il était possible d'avoir un levain vivant sous forme solide découpable et donc facilement dosable présentant une longue conservation en sélectionnant la farine utilisée.

Plus particulièrement, en sélectionnant de façon appropriée la farine de base, les présents inventeurs ont trouvé qu'il était possible d'obtenir un levain vivant sous forme solide découpable, facilement dosable.

Ainsi, la présente invention porte sur un levain vivant se présentant sous forme solide découpable, à base de farine d'orge, de sarrasin, de lupin, de millet, de quinoa, de petit épeautre ou de leurs mélanges.

Par « levain », dans la présente invention, on entend un produit obtenu en introduisant un starter dans de l'eau et en ajoutant de la farine puis en laissant mûrir.

Ainsi le levain selon l'invention peut être un levain de panification prêt à l'emploi ou bien peut être un levain starter de panification.

Par « sous forme solide découpable » on entend un bloc solide qui reste dans la forme qu'on lui a donnée et qui est divisible en morceaux, par exemple sous la pression d'un fil à beurre, d'une lame de couteau ou d'une corne de boulanger. Un tel bloc ne s'effrite pas, n'est pas friable et ne s'affaisse pas sous son propre poids. Il peut être sous forme d'un bloc obtenu par compaction, emballé dans un film adéquate permettant la conservation optimale du produit. Alternativement, il peut être contenu dans un récipient rigide de type seau.

Du fait de cette forme solide découpable, le levain selon l'invention peut être dosé précisément sans aucune difficulté. Il est donc très facile d'usage pour le boulanger.

La farine de base du levain selon l'invention est choisie dans le groupe comprenant la farine d'orge, de sarrasin, de lupin, de millet, de quinoa et de petit épeautre. Un mélange de farines peut être utilisé.

Selon un mode de réalisation particulier, la farine de base du levain est choisie parmi la farine d'orge, de sarrasin, de lupin, de millet, de quinoa ou leurs mélanges.

Selon l'invention, on préfère les farines ayant un taux de cendres de 0,35 à 2,50%, de préférence de 1 à 2,2%, plus préférentiellement de 1.5 à 2% en poids sur 100% de matière sèche farine.

Selon l'invention, on préfère les farines ayant un taux de protéines de 5 à 45 g/100g de farine, de préférence de 8 à 30 g/100g de farine, plus préférentiellement encore de 10 à 15g/100g de farine.

Selon un mode de réalisation particulier, la farine de base du levain selon l'invention est choisie parmi la farine d'orge, la farine de sarrasin, ou leurs mélanges.

Selon la farine utilisée, les arômes de levain seront différents. En particulier, en ajustant le ratio farine d'orge/farine de sarrasin, différents arômes sont développés.

Le levain selon l'invention présente une stabilité microbiologique pendant au moins 10 jours, de préférence au moins 20 jours et de préférence jusqu'à 8 semaines, de préférence à une température en froid positif (2-8°C, préférentiellement +4°C). Ainsi, il peut être conservé tout en gardant son activité.

La stabilité microbiologique est telle que la diminution de la teneur en bactéries lactiques est d'au maximum de 2 log dans les 2 mois suivant sa préparation.

Le levain selon l'invention présente des qualités gustatives tout à fait intéressantes qui restent stables pendant au moins 10 jours, de préférence au moins 20 jours et de préférence jusqu'à 8 semaines.

Compte tenu de sa bonne stabilité, le levain selon l'invention peut être conservé plusieurs semaines, jusqu'à 8 semaines. Afin d'améliorer encore sa durée de conservation, Il peut être conservé dans un emballage adapté du type film polyéthylène ou seau plastique polypropylène.

Le levain selon l'invention présente un taux d'hydratation de 45 à 95%, de préférence de 50 à 70%. Par taux d'hydratation on entend la quantité d'eau ajoutée pour 100 unités de farine mélangée au starter.

Selon un mode de réalisation, le levain selon l'invention comprend :
Farine d'orge et /ou de sarrasin : 100%
Starter :0,2-5%, de préférence 0,3-2%
Sel : 0-2%
Eau : 45-75%, de préférence entre 60 et 70%,
les pourcentages étant en pourcentage de boulanger c'est-à-dire pour 100 parties de farine.

L'invention porte également sur l'utilisation du levain découpable pour la fabrication de pain au levain.

Pour la fabrication de pain au levain, le taux d'incorporation du levain est supérieur à 10 %, de préférence de 11 àà 35%, plus préférentiellement encore de 15 à 20% dans 100 parties de farine.

Pour une utilisation dans la fabrication de pain au levain, le levain selon l'invention présente un taux d'hydratation de 45 à 95%, de préférence de 50 à 70%. Par taux d'hydratation on entend la quantité d'eau ajoutée pour 100 unités de farine mélangée au starter.

L'invention porte également sur l'utilisation du levain découpable comme starter de panification pour la préparation de levains liquides.

Dans cette utilisation, le taux d'incorporation du levain est de 5 à 25%, de préférence de 10 à 15% dans 100 parties de farine.

Dans cette utilisation, le levain selon l'invention présente un taux d'hydratation de 100 à 200%, de préférence de 150%. Par taux d'hydratation on entend la quantité d'eau ajoutée pour 100 unités de farine.

Le pouvoir d'acidification du levain starter de panification selon l'invention est tout à fait satisfaisant et peut être maintenu jusqu'à 11 semaines.

L'invention va être décrite de façon plus détaillée à l'aide des exemples ci-dessous qui sont donnés uniquement à titre d'illustration.

### Exemples:

### Exemple 1: Préparation de levains :

On prépare 6 levains différents à partir d'un starter commercial Livendo^{®} LV1 commercialisé par la Société Lesaffre et en utilisant différentes farines avec une fermentation de 20h00 à 30°C

**[Tableau 1]**

| Composition | quantité |
|---|---|
| Farine | 100% |
| Eau | À adapter |
| Sel | 1,5% |
| Livendo^{®} LV4 | 0,5% |
| Pétrissage | 5 min. |

Le type de farine et le taux d'hydratation sont indiqués dans le tableau 2 ci-dessous pour chacun des levains L1 à L6 préparés

**[Tableau 2]**

| Levain | Farine | Taux de cendres (% de cendre sur % de matière sèche farine) | Taux de protéines (g/100g de farine) | Hydratation % |
|---|---|---|---|---|
| L1 | Maïs | 0.64 | 5.84 | 75 |
| L2 | Orge | 1.93 | 9.7 | 70 |
| L3 | Sarrasin | 1.92 | 12.89 | 55 |
| L4 | Seigle T170 | 1.70 | 8.52 | 75 |
| L5 | Blé T55 | 0.54 | 11.22 | 55 |
| L6 | Meule | 0.64 | 5.84 | 55 |

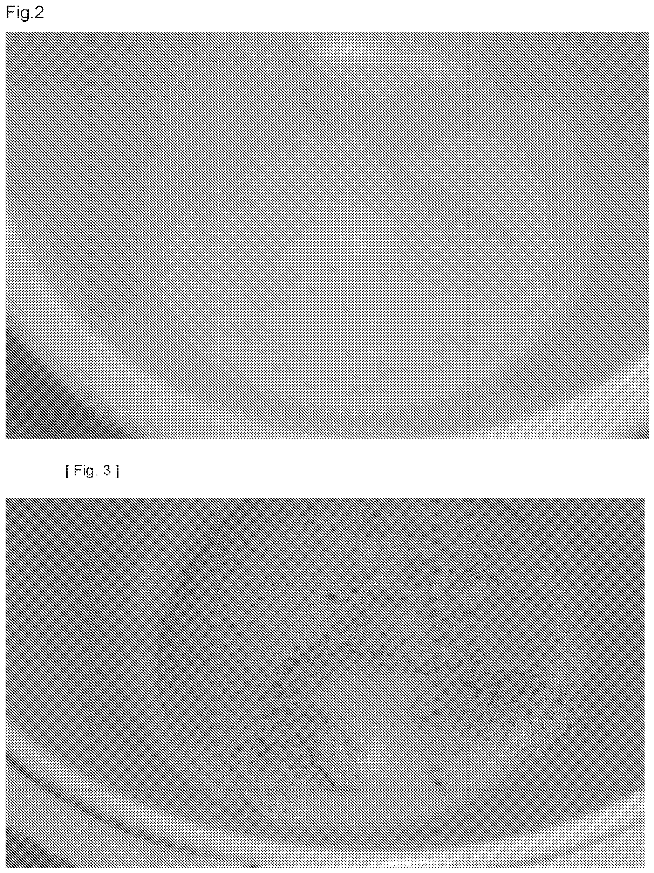

L'aspect et la tenue des levains a été appréciée à l'œil nu avant compactage. Les photos des différents levains sont données sur la figure 2 jointe.

Il ressort clairement de l'observation à l'œil nu que :
les levains L5 et L6 ne forment pas une masse compacte mais se délitent;
le levain L1 forme une masse non cohérente qui se brise en blocs plus petits;
les levains L2, L3 et L4 forment un bloc solide.

Les blocs solides formés par les levains ont été découpés au fil à beurre.

La découpe s'est faite aisément pour les levains L2 et L3 mais n'était pas possible pour le levain L4.

Le pH a été mesuré au temps 0. On a également mesuré l'acidité totale titrable TTA et la valeur SG « sauergrad ».

Pour ces analyses, 10g de levain ont été introduits dans un bécher gradué et de l'eau distillée a été ajoutée à raison de 90 mL (10:90 p/p). Le pH a été mesuré au moyen d'un pH-mètre et le TTA a été mesuré par dosage volumétrique acide/base avec une solution de soude N/10 jusqu'à atteindre pH=6,6 et la valeur SG a été mesurée de la même façon que le TTA mais pour atteindre un pH de 8,5.

Les résultats sont présentés dans le tableau ci-dessous pour la valeur à T0 :

**[Tableau 3]**

| Levain | pH | TTA | SG |
|---|---|---|---|
| L1 | 4,5 | 2,8 | ND |
| L2 | 4,2 | 8,2 | ND |
| L3 | 5,2 | 5,2 | ND |
| L4 | 5,2 | 4,2 | ND |
| L5 | 3,8 | 7,8 | ND |
| L6 | 3,9 | 7,1 | ND |

Pour le levain L2, les mesures ont également été effectuées toutes les semaines pendant 8 semaines. Les résultats sont présentés dans le Tableau 4 ci-dessous:

**[Tableau 4]**

| Bloc de levain | pH | TTA | Sg |
|---|---|---|---|
| De | 4,1 | 15 | 21 |
| 2 semaines | 4,1 | 16,7 | 22 |
| 3 semaines | 4,0 | 18,4 | -- |
| 4 semaines | 4,1 | 18,8 | 24,5 |
| 5 semaines | 4,0 | 19,5 | 24,3 |
| 6 semaines | 3,9 | 20,7 | 25,5 |
| 7 semaines | 4,0 | 19,7 | 24,6 |
| 8 semaines | 4,0 | 21 | 25,0 |

Le levain L2 a montré une stabilité au niveau de l'acidité (pas d'apparition d'off notes) pendant 8 semaines à 4°C.

La stabilité bactériologique a été évaluée pour le levain L2 pendant 8 semaines avec différents inoculats, en mesurant la flore aérobie mésophile (30°C) selon la norme NF EN ISO 4833-1 et les bactéries lactiques hétéro-fermentaires en milieu 3M 01/19-11/17. Les résultats obtenus sont présentés dans le tableau 5 ci-dessous.

**[Tableau 5]**

| Echantillon | durée de vie | Flore aérobie mésophile (30°C) (CFU/g) | Bactéries lactiques hétéro-fermentaires (CFU/g) |
|---|---|---|---|
| Levain sur orge - inoculat 0,5% Livendo^{®} LV4 | 1 semaine | ND | 9,30E+08 |
| | 4 semaines | 7,60E+05 | 2,40E+08 |
| | 8 semaines | 1,50E+05 | 9,80E+06 |

Le levain L2 présente une stabilité bactériologique satisfaisante. Il reste actif même après 8 semaines de conservation.

La stabilité a été observée également selon les paramètres suivants : liquéfaction / perte d'humidité, modification de la couleur, de l'odeur des blocs. Ces paramètres se sont avérés stables pendant 8 semaines.

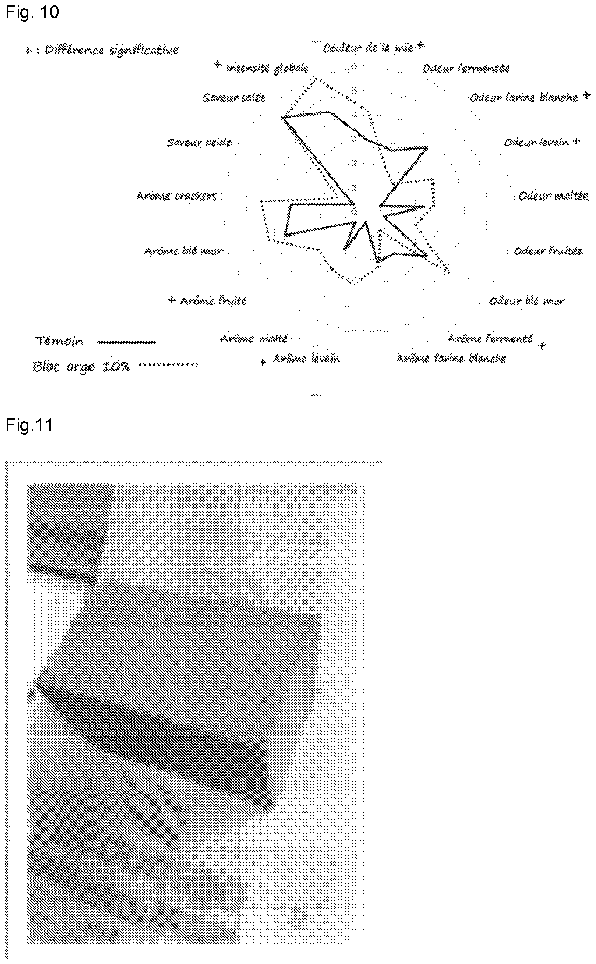

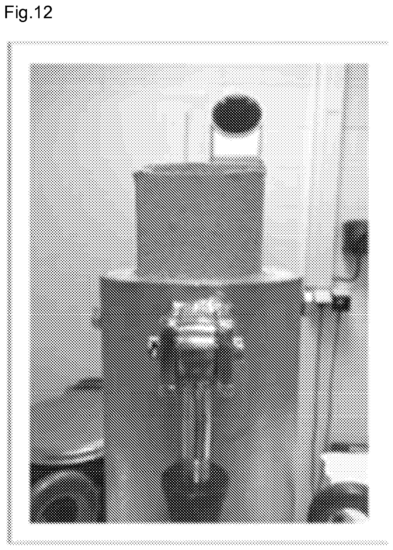

Un bloc de 0,5 kg et un bloc de 1 kg de levain L2 ont été compressés sous forme de parallélépipèdes et ont été photographiés (voir figures 11 et 12).

### Exemple 2 :

Les différents levains préparés à l'exemple 1 ci-dessus ont été utilisés pour préparer des pains au levain, avec la composition suivante:

**[Tableau 6]**

| Ingrédients | Kg | % |
|---|---|---|
| Farine de blé | 1000 | 100 |
| Eau | 700 | 70 |
| Sel | 21 | 2.1 |
| Levure pressée | 5 | 0.5 |
| Croustilis^{®} 0,5% | 3 | 0,3 |
| Levain de l'invention | 100 | 10 |
| Total | 2962,5 | |

Le diagramme de panification est donné ci-dessous dans le tableau 7:

**[Tableau 7]**

| ETAPES | |
|---|---|
| Pétrissage | 8 minutes à vitesse 1 + 2 minutes à vitesse 2 |
| Pointage | 2h à température ambiante (20-24°C, environ 22°C) |
| Division | 400g |
| Boulage | Oui |
| Détente | 15 minutes |
| Façonnage | A la main |
| Apprêt | 2h à 26°C |

| Scarification | |
|---|---|
| Cuisson | 25 min à 250°C cuisson dépressive |

Pour le pain préparé à partir du levain 2, on a observé une très bonne stabilité du pH et du TTA sur 8 semaines. Les valeurs étaient les suivantes :

**[Tableau 8]**

| Pain (4h30) | Sur la mie | | |
|---|---|---|---|
| | pH | TTA | Sg |
| Levain T0 15% | 4,99 | 4,2 | 7,7 |
| Levain T0 30% | 4,79 | 7,3 | 11,2 |
| Levain T8 15% | 4,98 | 4,5 | 7,78 |
| Levain T8 30% | 4,71 | 6,5 | 10,4 |

Une analyse organoleptique a été réalisée sur ces deux baguettes, avec d'un côté une baguette tradition témoin faite avec de la farine de blé, et de l'autre une baguette avec levain sur bloc d'orge à 10% ensemencé avec le starter Livendo LV4. Cette analyse est basée sur un test Q.D.A., les résultats ont été traités avec le logiciel Fizz. Dix panélistes experts Odeur & Goût spécialement formés pour l'analyse ont comparé les produits, et ont noté les différences sur une échelle allant de 0 à 10.

**[Tableau 9]**

| | Baguette avec levain sur bloc orge 10% | Baguette témoin |
|---|---|---|
| Aspect | Couleur de la mie plus foncée | couleur de mie crème |
| odeur | Plus levain | farine blanche |
| arôme | Goût global plus intense | fermentée |
| | Plus levain | |
| | Plus fruité (que témoin) | |

Les résultats obtenus sont résumés dans le tableau ci-dessus, et détaillés dans le diagramme de la FIG 11. Pour les deux pains on retrouve une typicité aromatique spécifique des céréales fermentées. La mie du pain de l'invention est plus colorée et le goût du pain selon l'invention est plus intense que celui du pain témoin avec des notes « levain et fruitées » plus intenses.

### Exemple 3:

On prépare 8 levains différents à partir d'un starter commercial SAF Levain et en utilisant différentes farines avec une fermentation de 24h00 à 35°C.

Le type de farine et le taux d'hydratation sont indiqués dans le tableau 8 ci-dessous pour chacun des levains L7 à L14 préparés :

**[Tableau 10]**

| Levain | Farine | Taux de cendres (% de cendre sur % de matière sèche farine) | Taux de protéines (g/100g de farine) | Hydratation % |
|---|---|---|---|---|
| L5' | Blé | 0.54 | 11.22 | 55 |
| L7 | Triticale | 1.7 | 10.37 | 63 |
| L8 | Riz | 0.35 | 7.51 | 83 |
| L9 | Millet | 0.75-2.40* | 11 | 61 |
| L10 | Quinoa | 2.46-3.36* | 13 | 65 |
| L11 | Lupin | 2 - 4* | 38 - 42* | 85 |
| L12 | Petit épeautre | 1.43 | 15.64 | 61 |
| L13 | Grand épeautre | 0.75 | 13.46 | 61 |
| L14 | Blé de Kharagan (connu sous l'appellation Kamut) | 1.76 | 14.96 | 50 |

| | | | | |
|---|---|---|---|---|
| *Valeurs théoriques | | | | |

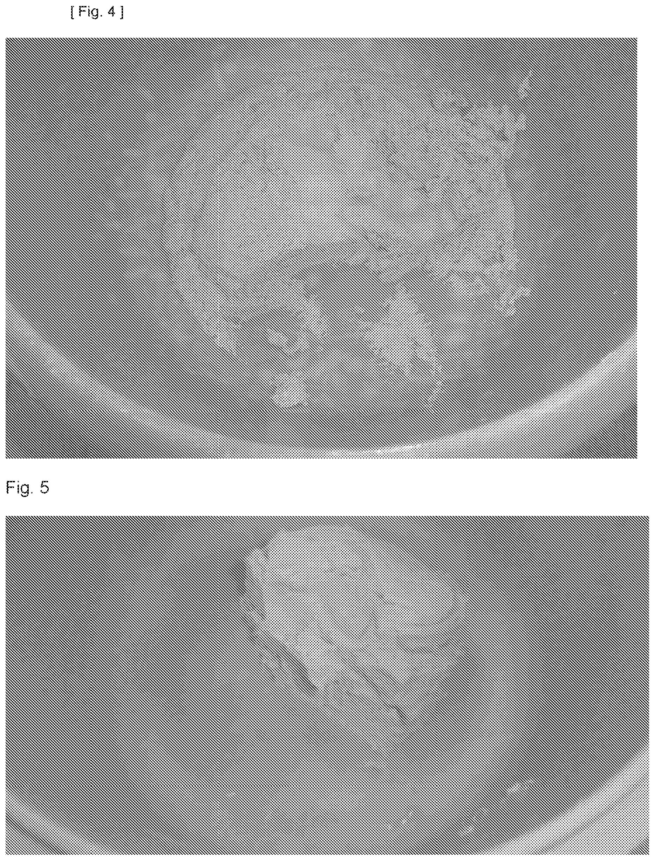

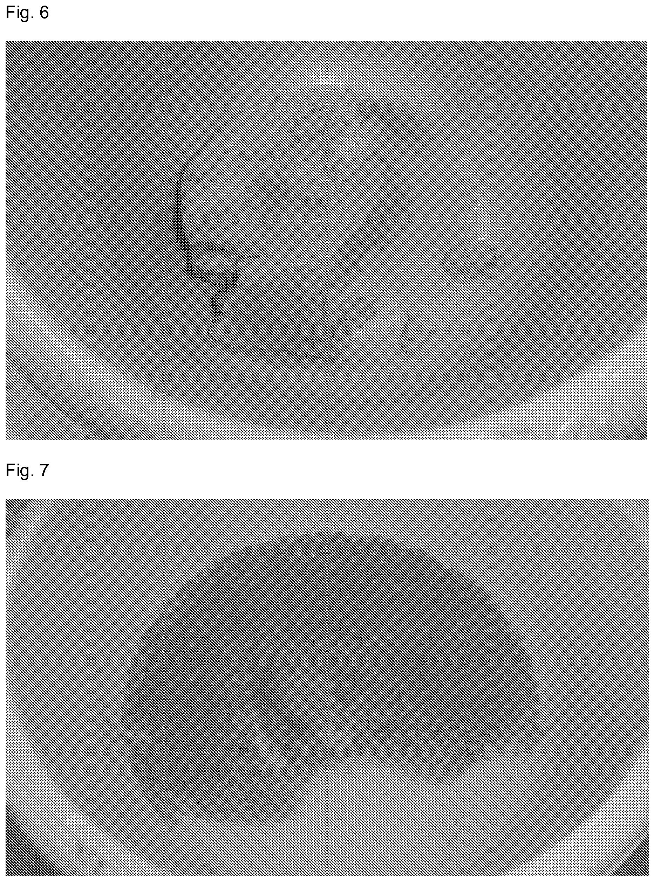

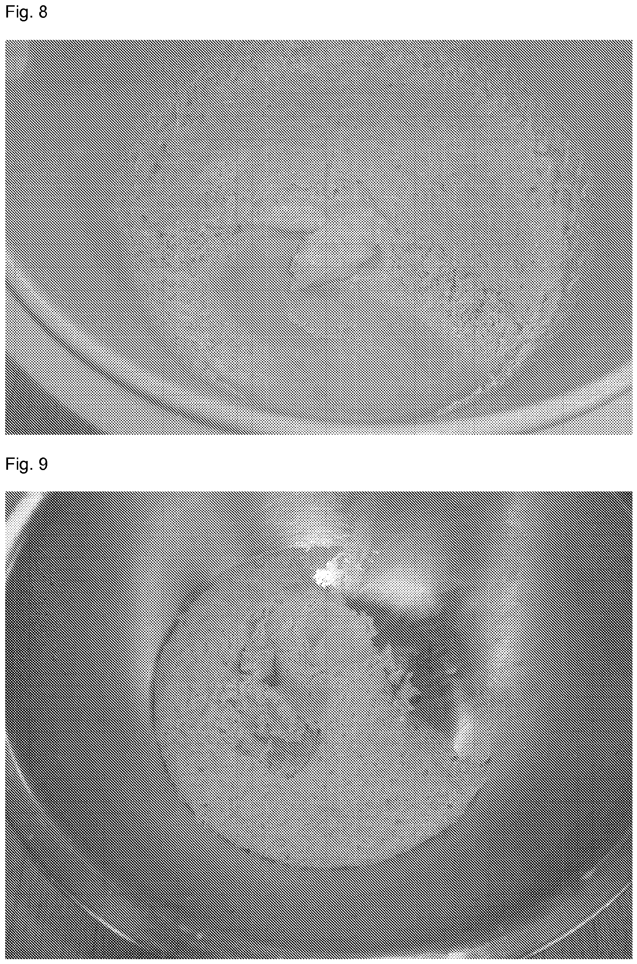

L'aspect et la tenue des levains a été appréciée à l'œil nu. Les photos des différents levains sont données sur les figures 2 à 10 jointes.

Il ressort clairement de l'observation à l'œil nu que :
les levains L7, L8, et L13 ne forment pas une masse compacte mais se délitent ;
les levains L9, L10, L11, L12 et L14 forment un bloc solide.

Les blocs solides formés par les levains ont été découpés au fil à beurre.

**[Tableau 11]**

| ETAPES | |
|---|---|
| Pétrissage | 5 minutes à vitesse 1 + 2 minutes à vitesse 2 |
| Pointage | 2h à température ambiante ((20-24°C, environ 22°C) |
| Division | 450g |
| Boulage | Oui |
| Détente | 30 minutes |
| Façonnage | A la main- Batard |
| Apprêt | 2h à 28°C |
| | Pousse Berlinoise 80g :200ml |
| Scarification | 1 scarification |
| Cuisson | 25 min à 250°C cuisson dépressive |

Sur chaque pain obtenu, on a mesuré sur la mie les valeurs de pH, TTA et SG.

**[Tableau 12]**

| Mie | pH | TTA | SG 5 |
|---|---|---|---|
| Pain avec L5 | 4,5 | 2,8 | nd |
| Pain avec L7 | 4,23 | 16,42 | 23,28 |
| Pain avec L8 | 5,12 | 2,34 | 4,02 |
| Pain avec L9 | 4,40 | 14,65 | 21,82 |
| Pain avec L10 | 4,30 | 22,08 | 34,28 |
| Pain avec L11 | 4,99 | 15,01 | 23,27 |
| Pain avec L12 | 4,35 | 13,42 | 19,75 |
| Pain avec L13 | 4,25 | 13,38 | 19,05 |
| Pain avec L14 | 4,41 | 13,24 | 19,24 |

Les valeurs obtenues étaient tout à fait satisfaisantes.

Une analyse organoleptique a été réalisée sur ces pains, Cette analyse est basée sur un test Q.D.A., les résultats ont été traités avec le logiciel Fizz. Dix panélistes experts Odeur & Goût spécialement formés pour l'analyse ont comparé les produits, et ont noté les arômes et odeurs.

**[Tableau 13]**

| | odeur | Goût |
|---|---|---|
| Pain avec L5 | Blé mur | Blé mur, Rond |
| Pain avec L7 | Acétique, Levain, Olive | Très salé, pas acétique |
| Pain avec L9 | Gras, malté | Gras, Gateau |
| Pain avec L10 | Riz/Maïs | Quinoa, Riz |
| Pain avec L11 | Blé mur, gras | Gras, Floral |
| Pain avec L12 | Savon, peinture | |
| Pain avec L13 | + vert | |
| Pain avec L14 | Fumé léger | Gras |

Les pains réalisés avec les levains L9, L10 et L11 présentaient des qualités organoleptiques tout à fait satisfaisantes.

### Exemple 4 :

On a réalisé des levains starter de panification de la façon suivante :

| Composition levain starter | Recette (% en poids de farine) |
|---|---|
| Farine d'orge | 100 |
| Eau à 30°C | 62,8 |
| Starter (crème de levain) | 10 |
| Améliorant enzymatique (Pro 404) | 0 |

A l'aide de cette composition des levains starter de panification ont été préparés selon les différents procédés suivants (avec ou sans rafraîchi)

| Procédé | Procédé 1 | Procédé 2 |
|---|---|---|
| Temps de maturation | 24 H | 24 H |
| Température de maturation | 32 °C | 32 °C |
| Repiquage | Non | 1 fois |

Le rafraîchi a été réalisé avec la formule suivante :

| | | |
|---|---|---|
| Farine d'orge | | 92,9% |
| | Eau | 63,9 |
| | levain starter | 15% |

Après 8 semaines de conservation, les bactéries présentes dans les levains starter de panification présentent toujours une viabilité supérieure à 10⁷CFU/g.

### Exemple 5 :

Les levains starter de panification préparés dans l'exemple 4 sont utilisés pour préparer des levains liquides de panification à base de farine de blé

Différents lots ont été préparés avec les levains fraichement préparés (T0), les levains conservés 7 semaines (T7) et conservés 11 semaines (T11) à + 4 °C. La composition des levains liquides est la suivante :

| Ingrédients | Quantité |
|---|---|
| Farine de blé T55 | 100% |
| Eau 30°C | 150% |
| Levain starter de l'exemple 4 | 10% |
| Temps de maturation | 24 h |
| Température de maturation | 30 °C |

Tous les lots de levains liquides obtenus présentaient des pH et des teneurs totales en acides satisfaisants même les lots obtenus avec le levain starter conservé 11 semaines.

Les résultats de mesure d'acide dans le levain liquide obtenu à partir du levain starter avec rafraîchi (levain starter de l'exemple 4 avec procédé 2) sont donnés dans le tableau ci-dessous en comparaison avec différents levains liquides obtenus de la même façon mais avec des starters congelés du commerce.

| Starter | pH | TTA |
|---|---|---|
| Selon l'invention | 3,8 | 7,9 |
| Livendo LV1 | 4,1 | 4,3 |
| Livendo LV2 | 4,2 | 3,9 |
| Livendo LV3 | 3,6 | 5,7 |

(les valeurs données pour les levains avec starter Livendo sont des estimations obtenues avec « My sourdough App »).

Le levain liquide obtenu à partir du levain starter de l'invention a un pouvoir d'acidification tout à fait intéressant, légèrement plus puissant que les levains starter congelés du commerce.

### Brève description des dessins

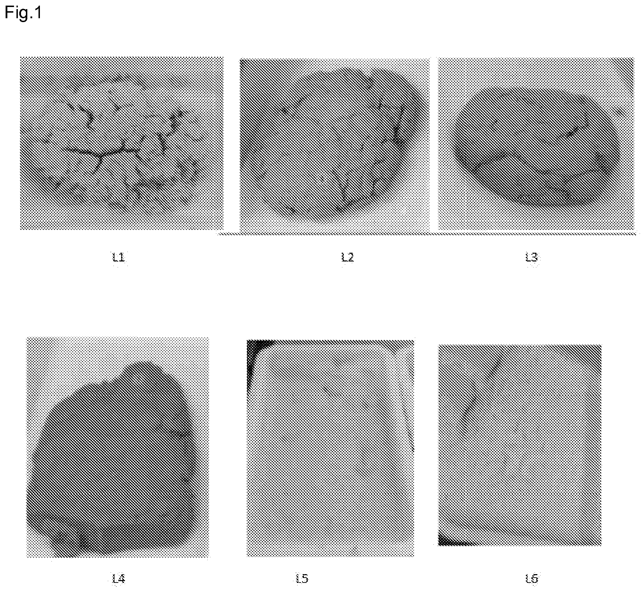

La figure 1 est une photographie des levains L1 à L6 préparés à l'exemple 1.
La figure 2 est une photographie du levain L5 préparé à l'exemple 3.
La figure 3 est une photographie du levain L7 préparé à l'exemple 3.
La figure 4 est une photographie du levain L9 préparé à l'exemple 3.
La figure 5 est une photographie du levain L10 préparé à l'exemple 3.
La figure 6 est une photographie du levain L11 préparé à l'exemple 3.
La figure 7 est une photographie du levain L12 préparé à l'exemple 3.
La figure 8 est une photographie du levain L13 préparé à l'exemple 3.
La figure 9 est une photographie du levain L14 préparé à l'exemple 3.
La figure 10 est un diagramme sensoriel réalisé sur du pain préparé selon l'exemple 2 et un pain au levain témoin.
Les figures 11 et 12 sont des photographies d'un bloc de levain L2 compressé découpable non friable.

## Revendications

1. Levain vivant **caractérisé par le fait qu'**il se présente sous forme solide découpable et qu'il est à base de farine d'orge, de sarrasin, de lupin, de millet, de quinoa, de petit épeautre ou de leurs mélanges.

2. Levain vivant selon la revendication 1 **caractérisé par le fait qu'**il est à base de farine d'orge, de sarrasin, de lupin, de millet, de quinoa ou de leurs mélanges.

3. Levain vivant selon l'une quelconque des revendications 1 à 2, **caractérisé par le fait que** la farine est de la farine d'orge et/ou de sarrasin.

4. Levain vivant selon l'une quelconque des revendications 1 à 3, **caractérisé par le fait que** la farine présente un taux de cendres de 0,35% à 2,50% en poids de farine.

5. Levain vivant selon l'une quelconque des revendications 1 à 4, **caractérisé par le fait que** la farine présente un taux de protéines de 5 à 45g/100g de farine.

6. Levain vivant selon l'une quelconque des revendications 1 à 4, **caractérisé par le fait qu'**il présente un taux d'hydratation de 45 à 95%, de préférence de 50% à 70%.

7. Levain vivant selon l'une quelconque des revendications 1 à 6, comprenant :
Farine : 100%
Starter : 0,2-5%, de préférence 0,3-2%
Sel : 0-2%
Eau : 45-75%, de préférence environ 50-65%,
les pourcentages étant pour 100 parties de farine.

8. Levain vivant selon l'une quelconque des revendications précédentes caractérisé après le fait qu'il présente une stabilité bactériologique pendant 2 mois telle que la diminution de la teneur en bactéries lactiques est d'au maximum de 2 log dans les 2 mois suivant sa préparation.

9. Utilisation d'un levain selon l'une quelconque des revendications 1 à 8, dans laquelle le levain est un levain prêt à l'emploi pour la préparation d'un pain au levain.

10. Utilisation selon la revendication 9, selon laquelle le taux d'incorporation du levain est de 10 à 35 %, de préférence de 15 à 20% dans 100 parties de farine.

11. Utilisation d'un levain selon l'une quelconque des revendications 1 à 8 comme starter de panification pour la préparation de levain liquide.

12. Utilisation selon la revendication 11, selon laquelle le taux d'incorporation du levain est de 5 à 25%, de préférence de 10 à 15% pour 100 parties de farine.

## Patentansprüche

1. Lebender Sauerteig, **dadurch gekennzeichnet, dass** er in fester, schneidbarer Form vorliegt und auf der Basis von Gersten-, Buchweizen-, Lupinen-, Hirse-, Quinoa-, Einkornmehl oder deren Mischungen hergestellt ist.

2. Lebender Sauerteig nach Anspruch 1, **dadurch gekennzeichnet, dass** er auf der Basis von Gersten-, Buchweizen-, Lupinen-, Hirse-, Quinoamehl oder deren Mischungen hergestellt ist.

3. Lebender Sauerteig nach einem der Ansprüche 1 bis 2, **dadurch gekennzeichnet, dass** das Mehl Gersten- und/oder Buchweizenmehl ist.

4. Lebender Sauerteig nach einem der Ansprüche 1 bis 3, **dadurch gekennzeichnet, dass** das Mehl einen Aschegehalt von 0,35 % bis 2,50 % bezogen auf das Gewicht des Mehls aufweist.

5. Lebender Sauerteig nach einem der Ansprüche 1 bis 4, **dadurch gekennzeichnet, dass** das Mehl einen Proteingehalt von 5 bis 45g/100g Mehl aufweist.

6. Lebender Sauerteig nach einem der Ansprüche 1 bis 4, **dadurch gekennzeichnet, dass** er einen Hydratationsgrad von 45 bis 95 %, vorzugsweise von 50 % bis 70 % aufweist.

7. Lebender Sauerteig nach einem der Ansprüche 1 bis 6, umfassend:
| | |
|---|---|
| Mehl: | 100 %. |
| Starter: | 0,2-5 %, vorzugsweise 0,3-2 %. |
| Salz: | 0-2 % |
| Wasser: | 45-75 %, vorzugsweise etwa 50-65 %, |
wobei die Prozentsätze auf 100 Teile Mehl bezogen sind.

8. Lebender Sauerteig nach einem der vorhergehenden Ansprüche, **dadurch gekennzeichnet, dass** er derartige eine bakteriologische Stabilität über 2 Monate aufweist, dass die Abnahme des Gehalts an Milchsäurebakterien in den 2 Monaten nach seiner Herstellung höchstens 2 log beträgt.

9. Verwendung eines Sauerteigs nach einem der Ansprüche 1 bis 8, wobei der Sauerteig ein gebrauchsfertiger Sauerteig für die Herstellung eines Sauerteigbrots ist.

10. Verwendung nach Anspruch 9, wobei die Einarbeitungsrate des Sauerteigs 10 bis 35 %, vorzugsweise 15 bis 20 %, in 100 Teilen Mehl beträgt.

11. Verwendung eines Sauerteigs nach einem der Ansprüche 1 bis 8 als Backstarter für die Herstellung von flüssigem Sauerteig.

12. Verwendung nach Anspruch 11, wobei die Einarbeitungsrate des Sauerteigs 5 bis 25 %, vorzugsweise 10 bis 15 %, pro 100 Teile Mehl beträgt.

## Claims

1. A live leaven, **characterized in that** it is in cuttable solid form and that it is based on flour of barley, buckwheat, lupine, millet, quinoa, einkorn or mixtures thereof.

2. The live leaven as claimed in claim 1, **characterized in that** it is based on flour of barley, buckwheat, lupine, millet, quinoa or mixtures thereof.

3. The live leaven as claimed in either one of claims 1 and 2, **characterized in that** the flour is barley flour and/or buckwheat flour.

4. The live leaven as claimed in any one of claims 1 to 3, **characterized in that** the flour has an ash content from 0.35 to 2.50 wt% of flour.

5. The live leaven as claimed in any one of claims 1 to 4, **characterized in that** the flour has a protein content from 5 to 45g/100g of flour.

6. The live leaven as claimed in any one of claims 1 to 4, **characterized in that** it has a hydration level from 45 to 95%, preferably from 50% to 70%.

7. The live leaven as claimed in any one of claims 1 to 6, comprising:
Flour: 100%
Starter: 0.2-5%, preferably 0.3-2%
Salt: 0-2%
Water: 45-75%, preferably about 50-65%,
the percentages being per 100 parts of flour.

8. The live leaven as claimed in any one of the preceding claims, **characterized in that** it has a bacteriological stability over a period of 2 months such that the decrease in the content of lactic acid bacteria is at most 2 log in the 2 months following its preparation.

9. The use of a leaven as claimed in any one of claims 1 to 8, in which the leaven is a ready-to-use leaven for preparing a sourdough bread.

10. The use as claimed in claim 9, according to which the rate of incorporation of the leaven is from 10 to 35%, preferably from 15 to 20% in 100 parts of flour.

11. The use of a leaven as claimed in any one of claims 1 to 8 as a breadmaking starter for preparing liquid leaven.

12. The use as claimed in claim 11, according to which the rate of incorporation of the leaven is from 5 to 25%, preferably from 10 to 15% per 100 parts of flour.
